# EUROPÄISCHE PATENTSCHRIFT

(11) **EP 2 910 829 B1**
(45) Veröffentlichungstag und Bekanntmachung des Hinweises auf die Patenterteilung: **20.02.2019**
(21) Anmeldenummer: 15000138.6
(22) Anmeldetag: 20.01.2015
(51) Int. Cl.: F16L 3/10, F16L 3/24, F16B 7/04

(54) **Rohrschellenelement für eine Rohrhalterung und Rohrhalterung**
Pipe clamp element for a pipe support and pipe support
Élément de collier de serrage de tuyau pour un support de tuyau et support de tuyau

(30) Priorität: 24.02.2014 CH 258142014
(43) Veröffentlichungstag der Anmeldung: 26.08.2015
(73) Patentinhaber: STS Systemtechnik Schänis GmbH, 8718 Schänis (CH)
(72) Erfinder: Huwyler, Willy, 6330 Cham (CH)
(74) Vertreter: Schalch, Rainer

(56) Entgegenhaltungen:
- CH-A5- 668 467
- CH-B1- 698 376
- CH-B1- 700 182
- DE-A1- 3 522 071

## Beschreibung

### Gebiet der Erfindung

Die Erfindung betrifft ein Rohrschellenelement gemäss Oberbegriff des Anspruchs 1. Ferner betrifft die Erfindung eine Rohrhalterung mit mindestens einem derartigen Rohrschellenelement.

### Hintergrund

Rohrhalterungen sind aus CH-A 668 467 A5 oder CH-B 700 182 B1 sowie CH 698 376 B1 bekannt. Sie dienen besonders zur Befestigung von Rohren an Schalungen. Solche Rohrhalterungen haben sich bewährt. Sie weisen zwei voneinander beabstandete Stützen auf, an denen mindestens ein Rohrschellenelement befestigt ist, das die Stützen verbindet und eine Auflage für ein Rohr oder Rohre bildet. Die Befestigung der Rohrschellenelemente, oder ggf. des nur einen Rohrschellenelements, an den Stützen mit Hilfe der bisher dazu verwendeten Klammern, kann aber Probleme stellen und Klammern können auch verloren gehen oder sich vor oder während des Einbringens von Beton in die Schalung lösen.

### Darstellung der Erfindung

Der Erfindung liegt die Aufgabe zu Grunde ein verbessertes Rohrschellenelement zu schaffen, welches die genannten Nachteile bei der Befestigung an den Stützen vermeidet.

Dies wird durch ein Rohrschellenelement nach Anspruch 1 gelöst. Dabei ist der Träger endseitig je mit einem Befestigungsteil ausgerüstet, welches am Träger in Längsrichtung des Trägers verschiebbar gehalten ist, derart, dass mindestens eine Zunge des Befestigungsteils in einer Anfangsstellung der Verschiebbarkeit des Befestigungsteils die Ausnehmung im Träger im Wesentlichen frei lässt und in einer dazu verschobenen Endstellung die Ausnehmung im Träger mindestens teilweise überdeckt.

Damit wird ein Rohrschellenelement geschaffen, das wie die bekannten Rohrschellenelemente auf die Stützen aufgeschoben werden kann, das aber keine separaten Klammern benötigt, um an den Stützen höheneinstellbar bzw. in der gewünschten Höhe fixiert zu werden. Es genügt, die beiden endseitigen Befestigungsteile aus der Anfangslage zu verschieben, womit die Zungen der beiden Befestigungsteile in die Stützen eingreifen und das Rohrschellenelement an diesen befestigen. Es können keine Klammern mehr verloren gehen und die Verschiebung erfolgt einfacher und rascher als das Einsetzen separater Klammern.

Das Befestigungsteil und der Träger weisen zusammenwirkende Führungsmittel auf, welche zu einer Führung des Befestigungsteils bei dessen Verschiebung in Längsrichtung des Trägers ausgestaltet sind, wodurch ein seitliches Ausweichen des Befestigungsteil bei der Verschiebung von der Anfangsstellung in die dazu verschobene Endstellung vermieden werden kann. Dies erlaubt das Verschieben des Befestigungsteils z.B. durch den Schlag eines Hammers, ohne dass bei einem unpräzisen Treffen mit dem Hammer eine Verkantung erfolgt.

Bei einem bevorzugten Rohrschellenelement ist das Befestigungsteil am Träger durch eine lösbare Formschlussverbindung in der Anfangsstellung gehalten. Damit ist sichergestellt, dass das Befestigungsteil beim Zusammenbau der Rohrhalterung bzw. beim Aufschieben eines Rohrschellenelements auf die Stützen keine Behinderung verursacht, da das Befestigungsteil in seiner Stellung, in welcher es die Ausnehmung für die Stützen frei gibt, fixiert ist. Erst wenn das Rohrschellenelement die gewünschte Lage entlang der Stütze erreicht hat, wird die Lagefixierung des Befestigungsteils am Träger gelöst und das Befestigungsteil wird zum Eingriff in einer Ausnehmung oder mehreren Ausnehmungen der Stütze gebracht.

Weiter ist es bevorzugt, dass das Befestigungsteil am Träger durch eine Formschlussverbindung in der verschobenen Stellung gehalten ist, wodurch ein ungewolltes Lösen des Befestigungsteils verhindert werden kann.

Weiter ist es bevorzugt, dass das Befestigungsteil das Ende des Trägers klammerartig und federnd umgreifend ausgebildet ist. Dies ergibt ein einfach auf dem Träger positionierbares Befestigungsteil und somit eine einfache Herstellung des Rohrschellenelements.

Bevorzugt ist, dass das Befestigungsteil einstückig ist. Dies erlaubt ebenfalls eine einfache Herstellung durch Stanz- und Biegeschritte.

Die Erfindung betrifft ferner eine Rohrhalterung, welche die genannten Nachteile nicht aufweist.

Diese Aufgabe wird durch eine Rohrhalterung mit den Merkmalen des Anspruchs 11 gelöst.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigt:
Figur 1 eine Rohrhalterung in frontaler Ansicht, bei welcher das untere Rohrschellenelement gemäss einer Ausführungsform der Erfindung ausgestaltet ist;
Figur 2 eine schaubildliche Detailansicht der Rohrhalterung von Figur 1, worin ein Teil einer der Stützen und das daran befestigte Ende des Rohrschellenelements dargestellt sind;
Figur 3 eine schaubildliche Detailansicht, bei welcher das Rohrschellenelement noch in seiner Höhe eingestellt werden kann und bei welcher das Befestigungsteil in seiner Anfangsstellung für die Verschiebung gezeigt ist;
Figur 4 eine Ansicht gemäss Figur 3, bei welcher aber das Befestigungsteil in seiner verschobenen Endstellung gezeigt ist, in welcher das Rohrschellenelement an der Stütze befestigt ist;
Figur 5 eine Darstellung, bei welcher das Befestigungsteil vom Ende des Rohrschellenelements entfernt dargestellt ist;
Figur 6 die Darstellung von Figur 5, bei welcher das klammerförmige Befestigungsteil nur teilweise dargestellt ist, damit die Führungselemente vollständig sichtbar werden;
Figur 7 eine Schnittansicht durch die Befestigung des Rohrschellenelements an der Stütze; und

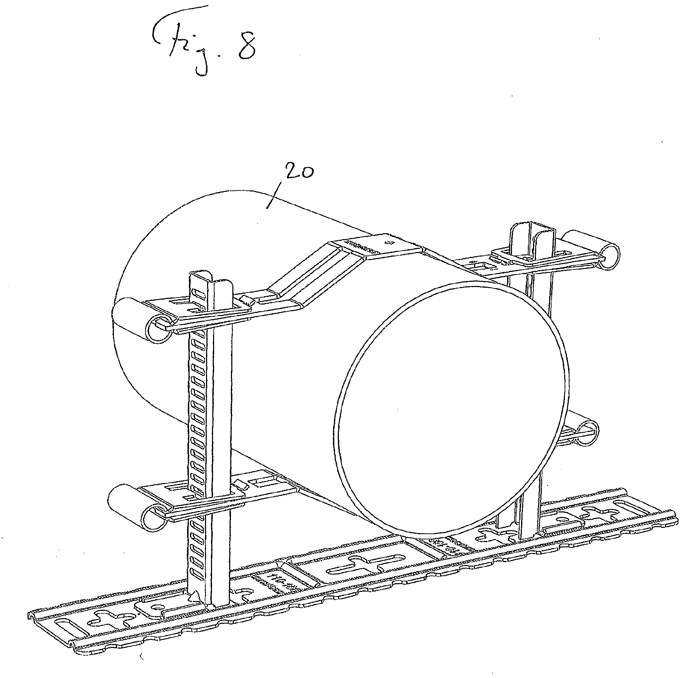

Figur 8 eine schaubildliche Darstellung einer Rohrhalterung mit zwei Rohrschellenelementen gemäss der Erfindung.

### Weg(e) zur Ausführung der Erfindung

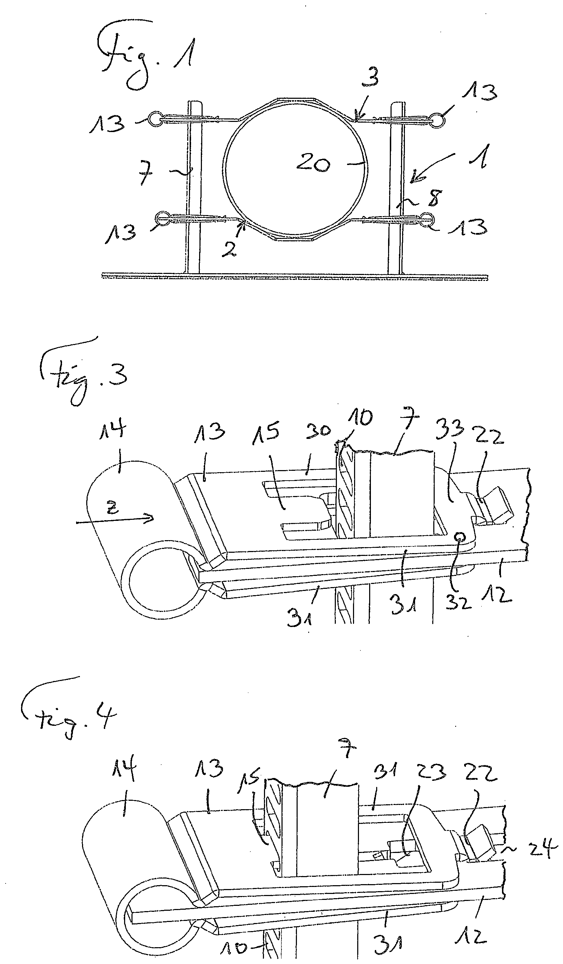

Figur 1 zeigt eine Rohrhalterung gemäss einem Ausführungsbeispiel der Erfindung. Die Stützen sind dabei an einer Grundplatte montierbar befestigt, wie aus CH-B 700 182 bekannt, könnten aber auch an der Grundplatte angeschweisst sein. Die Stützen könnten auch ohne Grundplatte an einer Schalung befestigt sein, z.B. wie in CH-A 668 467 erläutert. Für die Befestigung des Rohrschellenelements der vorliegenden Erfindung an den Stützen ist deren Befestigung an der Schalung oder an einem anderen Baukörper nicht relevant, es muss nur gegeben sein, dass die Stützen in passendem Abstand und in richtiger Lage zueinander angeordnet sind, damit Rohrschellenelemente auf die Stützen aufgeschoben werden können.

In Figur 1 ist das untere Rohrschellenelement 2 der Rohrhalterung 1 gemäss der Erfindung ausgeführt. Das obere Rohrschellenelement 3 ist ebenfalls ein gemäss der Erfindung ausgeführtes Element. Auf ein oberes bzw. zweites Rohrschellenelement 3 kann auch verzichtet werden, wenn das auf dem unteren Rohrschellenelement 2 aufliegende Rohr 20 an dem Rohrschellenelement 2 befestigt wird, z.B. mittels eines Spannbandes.

Das untere und das obere Rohrschellenelement 2 bzw. 3 weist jeweils an seinen beiden Endbereichen Befestigungsteile 13 auf, mittels welchen das Rohrschellenelement an den Stützen 7 und 8 befestigt wird, nachdem das Rohrschellenelement auf die Stützen aufgeschoben und in die gewünschte Position entlang der Stützen gebracht worden ist. Die Befestigungsteile bilden zusammen mit einem Träger das Rohrschellenelement und die Befestigungsteile sind am Träger gehalten. Träger und Befestigungsteile können herstellerseitig vormontiert sein oder allenfalls auch erst auf der Baustelle vormontiert werden.

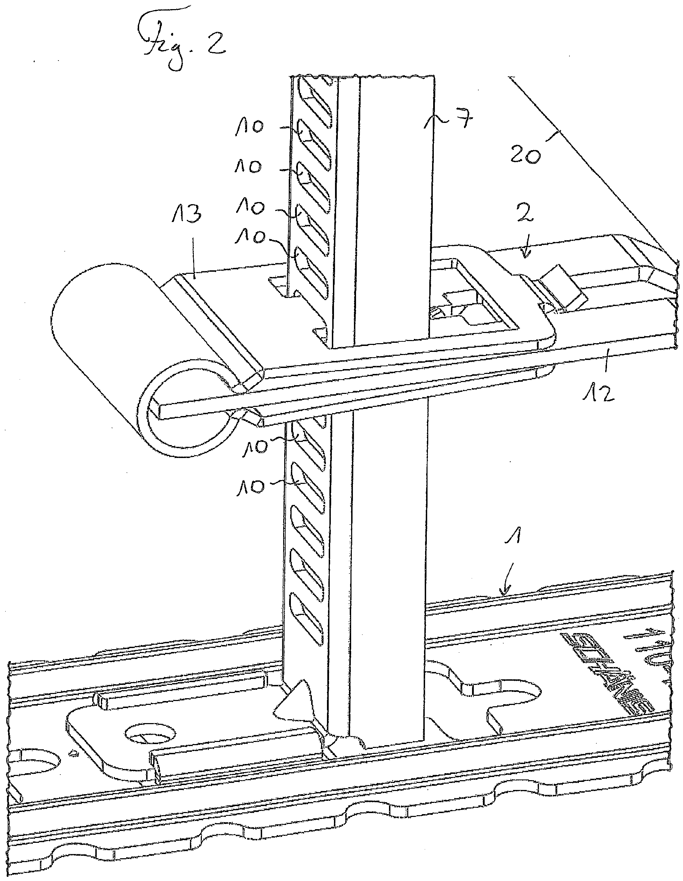

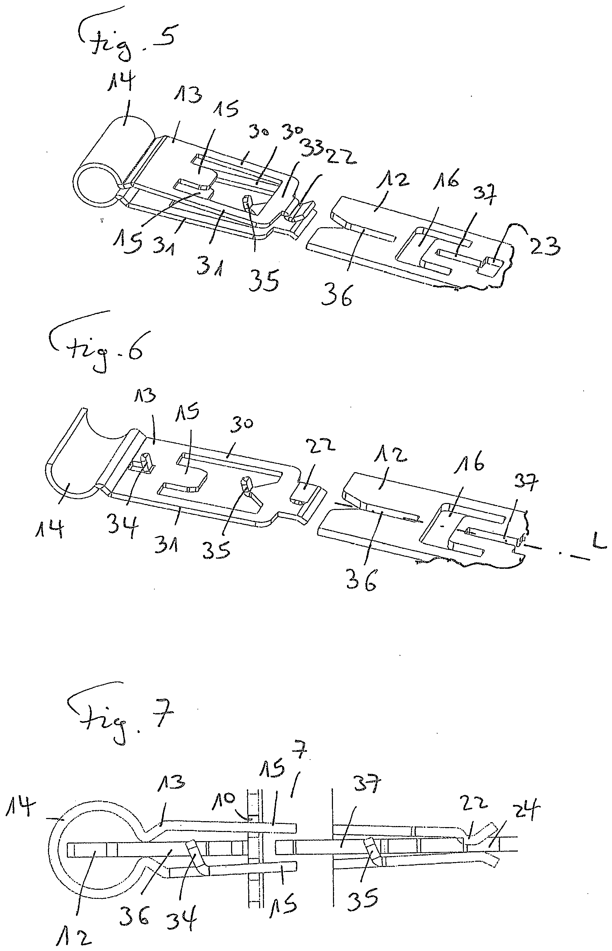

An Hand der Figuren 2 bis 7 wird ein bevorzugtes Ausführungsbeispiel des Rohrschellenelements bzw. der Rohrhalterung erläutert. Figur 2 zeigt die Stütze 7, welche an einer Grundplatte befestigt ist und von dieser senkrecht nach oben weg ragt, wie das auch für die Stütze 8 gilt, die in Figur 2 nicht ersichtlich ist. Die Stützen weisen auf bekannte Weise eine Vielzahl von in Reihe angeordneten Ausnehmungen 10 auf, welche bei beiden Stützen gleich angeordnet sind. Die gezeigte Stütze 7 weist in diesem Beispiel einen u-förmigen Querschnitt auf und die Ausnehmungen 10 sind in der Basis der u-Form angeordnet. Das Rohrschellenelement 2 weist in jedem seiner beiden Endbereiche eine Ausnehmung 16 auf, die ein Aufschieben des Rohrschellenelements auf die Stützen erlaubt. Insbesondere ist die Form der Ausnehmung auch an die Form der Stütze angepasst, was vorliegend in den Figuren 5 und 6 ersichtlich ist und noch erläutert wird.

Das Rohrschellenelement 2 weist einen Träger 12 auf, auf dem das zu haltende Rohr aufliegen kann. Der Träger 12 ist streifen- oder bandförmig mit einer Längserstreckung, die es erlaubt, den Träger auf beide Stützen der Rohrhalterung aufzuschieben, so dass er zwischen den Stützen eine Auflage für das Rohr oder die Rohre bildet, wie in Figur 1 ersichtlich. Der Träger kann gerade verlaufen oder kann zur Aufnahme des Rohrs auch gekröpft sein, wie in Figur 1 gezeigt. Der Träger 12 ist in der Regel aus einem Metallstreifen gebildet, in welchem die endseitigen Ausnehmungen für den Durchtritt der Stützen und die noch erläuterten weiteren Ausnehmungen durch Stanzvorgänge erzeugt worden sind. Durch die Streifenform bzw. Bandform des Trägers 12 ist eine Längsmittelachse desselben gegeben, die in Figur 6 mit der strichpunktierten Linie L angedeutet ist.

Das Rohrschellenelement 2 weist ferner endseitig je ein Befestigungsteil auf, welches es erlaubt, das Rohrschellenteil in der gewünschten Position, bzw. Höhe über der Grundplatte oder Schalung, an den Stützen zu fixieren. Die Fixierung erfolgt dabei derart, dass das Befestigungsteil mindestens eine Zunge aufweist, die in eine der Ausnehmungen 10 der Stützen eingreifen kann. In den Figuren 2 bis 6 ist eine Ausführungsform des Befestigungsteils gezeigt, die mit 13 bezeichnet ist. Das Befestigungsteil ist am Träger in Längsrichtung des Trägers verschiebbar angeordnet. Es ist in einer Anfangsstellung in Figur 3 gezeigt. In dieser Anfangsstellung ist das Befestigungsteil 13 in einer Position, in welcher dessen Zunge 15 nicht über die Ausnehmung 16 im Träger 12 ragt. Somit behindert die Zunge 15 bzw. das Befestigungsteil 13 das Aufschieben des Rohrschellenelements 2 auf die Stütze 7 nicht.

Wird nun das Befestigungsteil 13 in Richtung des Pfeils Z entlang der Längsachse L des Trägers verschoben, so greift die Zunge 15 in die ihr gegenüberliegende Ausnehmung 10 der Stütze 7 ein, womit das Rohrschellenelement 2 an der Stütze in der zuvor beim Aufschieben des Rohrschellenelements an der Stütze gewählten Höhe fixiert ist.

Das als bevorzugtes Beispiel dargestellte Befestigungsteil 13 ist ein klammerartiges Befestigungsteil, das den Träger 12 endseitig umgreift und das auf jeder Seite des Trägers 12 eine Zunge 15 aufweist, welche Zungen in benachbarte Ausnehmungen 10 der Stütze eingreifen. Dies ist insbesondere in Figur 7 ersichtlich, die beiden Zungen sind aber auch in der Figur 5 sichtbar. Eine Ausführung mit zwei Zungen, die in zwei verschiedene Ausnehmungen 10 der Stütze eingreifen können, ist bevorzugt, um den Träger mit dem daran angeordneten Befestigungsteil 13 an der Stütze zu fixieren. Es kann aber auch ein anderes ausgeführtes Befestigungsteil am Träger vorgesehen sein, welches z.B. als ein plattenförmiges, im Wesentlichen nur einseitig an dem Träger in oder an einer Schiebeführung desselben verschiebbar gehaltenes Befestigungsteil ausgeführt ist. In diesem Fall wäre nur eine Zunge auf der einen Seite des Trägers vorhanden. Die dargestellte klammerförmige Ausgestaltung des Befestigungsteils 13 verwendet aber vorzugsweise zwei bzw. eine obere und eine untere Zunge.

Das Befestigungsteil 13 ist bevorzugt an dem Träger so angeordnet, dass es in der Anfangsstellung lösbar fixiert ist. Dies erlaubt das besonders sichere und einfache Aufschieben der Rohrschellenelemente auf die Stützen ohne Behinderung durch die Befestigungsteile, da diese nicht durch eine lose Verschiebbarkeit ungewollt zuvor über die Ausnehmung 16 gelangen können, was das Aufschieben über die Stützen mühsam machen würde, da jeweils die allenfalls das Aufschieben blockierende Zunge durch ein Zurückziehen des Befestigungsteils wieder in die Anfangsstellung gebracht werden müsste. Durch die lösbare Fixierung in der Anfangsstellung sind die beidseitigen Ausnehmungen 16 im Träger 12 solange frei, bis die Fixierung gelöst wird. Eine solche Fixierung kann auf verschiedene Weise erfolgen, z.B. materialschlüssig durch eine aufbrechbare Verschweissung, Verlötung oder Verklebung des Befestigungsteils am Träger. Bevorzugt ist indes eine Formschlussverbindung und insbesondere eine Rastverbindung, bei welcher der Träger und das Befestigungsteil 13 in der Anfangsstellung miteinander verrastet sind. Ein solches Beispiel ist in den Figuren ersichtlich, welches eine Rastzunge 22 des Befestigungsteils 13 zeigt, die in eine Ausnehmung 23 des Trägers 12 oder in eine Vertiefung desselben eingreift. Wird das Befestigungsteil aus der Anfangsstellung von Figur 3 in Richtung des Pfeils Z bewegt, was zum Beispiel mit einem Schlag auf den Rückteil 14 mittels eines Hammers bewirkt werden kann, so wird die Rastzunge 22 aus der Ausnehmung gedrückt und das Befestigungsteil wird aus seiner in der Anfangsstellung fixierten Lage gelöst. Damit gelangen auch die Zungen 15 in die zugehörigen Ausnehmungen 10 an der Stütze und das Rohrschellenelement ist an der Stütze befestigt.

In dem gezeigten Beispiel ist eine weitere Fixierung des Befestigungsteils in seiner gegenüber der Anfangsstellung verschobenen Endlage vorgesehen, wie in Figur 4 dargestellt. Damit kann verhindert werden, dass sich das Befestigungsteil ungewollt wieder in die Anfangsstellung zurück bewegt. Es kann dafür ein separates Rastelement vorgesehen werden. Bei der gezeigten Ausführung wird die Fixierung des Befestigungsteils 13 in der Endlage beim Befestigungsteil durch dieselben Rastmittel 22 bewirkt, welche in ein zusätzliches Gegenstück am Träger 12 eingreifen, hier in eine weitere Ausnehmung 24 in dem Träger, die in Verschieberichtung nach der Ausnehmung 23 liegt. Die beiden Ausnehmungen sind durch einen Steg des Trägers 12 voneinander getrennt.

Bei dem dargestellten, den Träger klammerartig übergreifenden Befestigungsteil sind vier Arme 30 und 31 vorgesehen, die sich am Träger seitlich zu der Ausnehmung 16 für die Stütze erstrecken. Die Fixierung in der Anfangsstellung und ggf. in der Endstellung könnte auch durch ein Mittel an einem der Arme oder an mehreren Armen bewirkt werden. In Figur 3 ist das mit dem Kreis 32 angedeutet, welcher zum Beispiel eine unterseitige Erhebung an dem einen Arm 31 darstellen soll, die in eine entsprechende Vertiefung am Träger eingreift. Auch die Fixierung in der Endstellung könnte dann so ausgeführt sein, dass die Erhebung an der Unterseite des Arms in eine weitere Vertiefung am Träger eingreift.

In dem gezeigten Beispiel sind die Arme 30 und 31 mit einem Steg 33 miteinander verbunden. Dies ist eine bevorzugte Ausführung. Sie bietet eine gute Möglichkeit zur Ausbildung der Rastmittel 22 am Befestigungsteil 13.

Das Befestigungsteil 13 ist in Längsrichtung L des Trägers 12 durch Führungsmittel geführt. Dies verhindert, dass bei der Bewegung in Richtung des Pfeils Z eine Verkantung des Befestigungsteils 13 eintreten kann, was allenfalls die korrekte Befestigung des Rohrschellenelements 2 durch dessen Befestigungsteil 13 verhindern könnte. Solche Führungsmittel könnten zum Beispiel seitlich abgebogene Laschen am Befestigungsteil sein, die den Träger seitlich übergreifen und somit für die Führung an dessen seitlichen Stirnflächen angreifen. Eine bevorzugte Ausführungsform ist bei dem gezeigten, den Träger 12 übergreifenden Befestigungsteil 13 durch die vom Befestigungsteil 13 in den vom Träger 12 eingenommenen Raum umgebogenen Zungen 34 und 35 ausgeführt. Diese Zungen sind in dem in Figur 6 teilweise aufgeschnitten dargestellten Befestigungsteil 13 gut ersichtlich sowie in der Schnittdarstellung von Figur 7. Diese Zungen 34 und 35 greifen in Schlitze 36 und 37 des Trägers 12 ein und führen das Befestigungsteil 13 in Längsrichtung. Die Figuren 5 und 6 zeigen ferner die u-förmige Kontur der Ausnehmung 16, die an den Querschnitt der Stütze angepasst ist. Die Figuren 5 und 6 zeigen das Befestigungsteil und den Träger in getrennter Stellung, was insbesondere vor der Montage des Befestigungsteils am Träger der Fall ist. Beim einsatzbereiten Rohrschellenelement sind diese Bauteile aber aneinander angeordnet und bilden zusammen das Rohrschellenelement. Die Montage kann fabrikseitig erfolgen oder auch erst auf der Baustelle.

Bei dem gezeigten Beispiel ist das Befestigungsteil 13 eine Klammer mit einem gebogenen Rückteil 14, welches die Klammer federnd zusammen presst, so dass die Rastmittel eine genügende Vorspannung aufweisen, um das Befestigungsteil in seiner Anfangsstellung zu halten und ggf. auch in der Endstellung, wenn auch für diese eine Verrastung vorgesehen ist, wie in dem gezeigten Beispiel.

Bei einem Rohrschellenelement 2 für eine Rohrhalterung 1 mit zwei Stützen 7, 8, auf welche das Rohrschellenelement aufgeschoben und an welchen es in gewünschter Höhe befestigt wird, ist somit das Rohrschellenelement von einem Träger 12 mit daran endseitig gehaltenen Befestigungsteilen 13 gebildet. Diese sind zum Eingriff in die Stützen verschiebbar, was eine einfachere und schnellere Befestigung als mit den herkömmlichen separaten Klammern ergibt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Rohrschellenelement (2) für eine Rohrhalterung (1) mit beidseitig eines Raums für das Rohr (20) angeordneten Stützen (7, 8), welche Stützen (7, 8) durch das Rohrschellenelement (2) verbindbar sind, wobei das Rohrschellenelement (2) einen Träger (12) aufweist, der endseitig je mit einer Ausnehmung (16) zur Aufnahme einer der Stützen (7, 8) versehen ist, wobei der Träger (12) endseitig je mit einem Befestigungsteil (13) ausgerüstet ist, welches am Träger (12) in Längsrichtung (L) des Trägers (12) verschiebbar gehalten ist, derart, dass mindestens eine Zunge (15) des jeweiligen Befestigungsteils (13) in einer Anfangsstellung der Verschiebbarkeit des Befestigungsteils die Ausnehmung (16) im Träger (12) im Wesentlichen frei lässt und in einer dazu verschobenen Endstellung die Ausnehmung (16) im Träger (12) mindestens teilweise überdeckt, **dadurch gekennzeichnet, dass** das Befestigungsteil (13) und der Träger (12) zusammenwirkende Führungsmittel (34, 35, 36, 37) aufweisen, welche zu einer Führung des Befestigungsteils (13) bei dessen Verschiebung in Längsrichtung (L) des Trägers (12) ausgestaltet sind.

2. Rohrschellenelement nach Anspruch 1, **dadurch gekennzeichnet, dass** der Träger (12) bandförmig ist.

3. Rohrschellenelement nach Anspruch 1 oder 2, **dadurch gekennzeichnet, dass** das Befestigungsteil (13) am Träger (12) durch eine lösbare Formschlussverbindung (22, 23) in der Anfangsstellung gehalten ist.

4. Rohrschellenelement nach einem der Ansprüche 1 bis 3, **dadurch gekennzeichnet, dass** das Befestigungsteil (13) am Träger (12) durch eine Formschlussverbindung (22, 24) in der verschobenen Endstellung festhaltbar ist.

5. Rohrschellenelement nach einem des Ansprüche 1 bis 4, **dadurch gekennzeichnet, dass** das Befestigungsteil (13) als ein das Ende des Trägers (12) klammerartig und federnd umgreifendes Befestigungsteil (13) ausgebildet ist.

6. Rohrschellenelement nach einem der Ansprüche 1 bis 5, **dadurch gekennzeichnet, dass** das Befestigungsteil (13) mehrere sich je seitlich der Ausnehmung (16) erstreckende Arme (30, 31) aufweist.

7. Rohrschellenelement nach Anspruch 6, **dadurch gekennzeichnet, dass** jeweils zwei benachbarte Arme (30, 31) mit einem Steg (33) miteinander verbunden sind.

8. Rohrschellenelement nach einem der Ansprüche 1 bis 7, **dadurch gekennzeichnet, dass** das Befestigungsteil (13) einstückig ausgebildet ist.

9. Rohrschellenelement nach Anspruch 1, **dadurch gekennzeichnet, dass** die Führungsmittel mindestens eine Ausformung (34, 35) am Befestigungsteil (13) und mindestens einen damit zusammenwirkenden Schlitz (36, 37) am Träger (12) umfassen.

10. Rohrschellenelement nach einem der Ansprüche 1 bis 9, **dadurch gekennzeichnet, dass** das Befestigungsteil (13) eine unterhalb des Trägers (12) liegende Zunge (15) und eine weitere, oberhalb des Trägers (12) liegende Zunge (15) aufweist.

11. Rohrhalterung (1) mit beidseitig eines Raums zur Aufnahme mindestens eines Rohrs (20) liegenden Stützen (7, 8) mit einer Vielzahl von in Reihe angeordneten Ausnehmungen (10) und mindestens einem die Stützen (7, 8) verbindenden Rohrschellenelement (2) nach einem der Ansprüche 1 bis 10, wobei die Stützen (7, 8) durch das mindestens eine Rohrschellenelement (2) hindurch verlaufen und die mindestens eine Zunge (15) jedes der beiden Befestigungsteile (13) zum Eingriff in die Ausnehmungen (10) ausgestaltet ist.

## Claims

1. Pipe clamp element (2) for a pipe support (1), with struts (7, 8) arranged on both sides of a space for the pipe (20), which struts (7, 8) are connectable by the pipe clamp element (2), wherein the pipe clamp element (2) has a carrier (12) having at each end side a recess (16) for receiving one of the struts (7, 8), wherein the carrier (12) is equipped with an attachment part (13) on each end side, which is supported in a shiftable manner on the carrier (12) in longitudinal direction of the carrier (12), in such a way that at least a tongue (15) of the respective attachment part (13) leaves the recess (16) in the carrier (12) substantially free in an initial position of the shifting of the attachment part and in a final position shifted with respect thereto covers the recess (16) in the carrier (12) at least partially, **characterized in that** the attachment part (13) and the carrier (12) have interacting guiding means (34, 35, 36, 37) which are adapted to guide the attachment part (13) during its shifting in longitudinal direction (L) of the carrier (12) .

2. Pipe clamp element according to claim 1, **characterized in that** the carrier (12) is band-shaped.

3. Pipe clamp element according to claim 1 or 2, **characterized in that** the attachment part (13) is held on the carrier (12) in the initial position by a detachable positive-locking connection (22, 23).

4. Pipe clamp element according to one of the claims 1 to 3, **characterized in that** the attachment part (13) is held on the carrier (12) in the shifted final position by a detachable positive-locking connection (22, 24).

5. Pipe clamp element according to one of the claims 1 to 4, **characterized in that** the attachment part (13) is formed as a attachment part (13) encompassing the end of the carrier (12) in a clamping and resilient way.

6. Pipe clamp element according to one of the claims 1 to 5, **characterized in that** the attachment part (13) has multiple arms (30, 31), each extending laterally of the recess (16).

7. Pipe clamp element according to claim 6, **characterized in that** each two neighboring arms (30, 31) are connected to one another with a bridge (33).

8. Pipe clamp element according one of the claims 1 to 7, **characterized in that** the attachment part (13) is formed in one piece.

9. Pipe clamp element according to claim 1, **characterized in that** the guiding means comprise at least a shaping (34, 35) at the attachment part (13) and at least a slit (36, 37) at the carrier (12), which interacts with it.

10. Pipe clamp element according to one of the claims 1 to 9, **characterized in that** the attachment part (13) has a tongue (15) lying below the carrier (12) and a further tongue (15) lying above the carrier (12).

11. Pipe support (1) with struts (7, 8) lying on both sides of a space for receiving at least a pipe (20), with a plurality of recesses (10) arranged in a row and at least a pipe clamp element (2) according to one of the claims 1 to 10, which connects the struts (7, 8), wherein the struts (7, 8) run through the at least one pipe clamp element (2) and the at least one tongue (15) of each of the attachment parts (13) is adapted to engage the recesses (10).

## Revendications

1. Collier de serrage pour tuyau (2) pour un support de tuyau (1), avec des jambes (7, 8) arrangées des deux côtés d'un espace pour le tuyau (20), les jambes (7, 8) étant connectables par le collier de serrage pour tuyau (2), le collier de serrage pour tuyau (2) ayant un porteur (12) qui a de chaque côté d'extrémité avec une cavité (16) pour recevoir une des jambes (7, 8), le porteur (12) étant équipé avec une partie d'attachement (13) de chaque côté d'extrémité, qui est supporté de manière déplaçable sur le porteur (12), en direction longitudinale sur le porteur (12), de sorte qu'au moins une languette (15) de la respective partie d'attachement (13) sort de la cavité (16) dans le porteur (12) de manière essentiellement libre dans une position initiale du déplacement de la partie d'attachement et dans une position finale déplacée par rapport à la position initiale elle couvre la cavité (16) dans le porteur (12) au moins partiellement, **caractérisé en ce que** la partie d'attachement (13) et le porteur (12) ont des moyens de guidage interagissants (34, 35, 36, 37) qui sont adaptés à guider la partie d'attachement (13) pendant son déplacement en direction longitudinale (L) du porteur (12) .

2. Collier de serrage pour tuyau selon la revendication 1, **caractérisé en ce que** le porteur (12) est en forme de bande.

3. Collier de serrage pour tuyau selon l'une des revendications 1 ou 2, **caractérisé en ce que** la partie d'attachement (13) est supportée sur le porteur (12) dans la position initiale par une liaison (22, 23) détachable à engagement positif.

4. Collier de serrage pour tuyau selon l'une des revendications 1 à 3, **caractérisé en ce que** la partie d'attachement (13) est supportée sur le porteur (12) dans la position finale par une liaison (22, 24) détachable à engagement positif.

5. Collier de serrage pour tuyau selon l'une des revendications 1 à 4, **caractérisé en ce que** la partie d'attachement (13) est formée comme partie d'attachement (13) qui entoure l'extrémité du porteur (12) de manière serrante er résiliente.

6. Collier de serrage pour tuyau selon l'une des revendications 1 à 5, **caractérisé en ce que** la partie d'attachement (13) a une pluralité de bras (30, 31), chacun s'étendant du côté latéral de la cavité (16).

7. Collier de serrage pour tuyau selon la revendication 6, **caractérisé en ce que** chaque deux bras voisins (30, 31) sont connectés l'un avec l'autre avec un pont (33).

8. Collier de serrage pour tuyau selon l'une des revendications 1 à 7, **caractérisé en ce que** la partie d'attachement (13) est formée en une pièce.

9. Collier de serrage pour tuyau selon la revendication 1, **caractérisé en ce que** les moyens de guidage comprennent au moins une forme (34, 35) à la partie d'attachement (13) et au moins une fente (36, 37) au porteur (12), qui interagit avec la forme.

10. Collier de serrage pour tuyau selon l'une des revendications 1 à 9, **caractérisé en ce que** la partie d'attachement (13) a une languette (15) posée au-dessous du porteur (12) et une autre languette (15) posée au-dessus du porteur (12).

11. Support de tuyau (1) avec des jambes (7, 8) posés des deux côtés d'un espace pour recevoir au moins un tuyau (20), avec une pluralité de cavités (10) arrangées en ligne et au moins un collier de serrage pour tuyau (2) selon l'une des revendications 1 à 10, qui connecte les jambes (7, 8) les jambes (7, 8) s'étendant à travers l'au moins un collier de serrage pour tuyau (2) et l'au moins une languette (15) de chacun des deux parties d'attachement (13) étant adaptée à engrener les cavités (10).
